# EUROPEAN PATENT SPECIFICATION

(11) **EP 3 684 026 B1**
(45) Date of publication and mention of the grant of the patent: **01.09.2021**
(21) Application number: 18920134.6
(22) Date of filing: 15.06.2018
(51) Int. Cl.: H04L 29/06, G06F 21/64

(54) **METHOD AND APPARATUS FOR SENDING FORM REQUEST**
VERFAHREN UND VORRICHTUNG ZUM SENDEN EINER FORMULARANFORDERUNG
PROCÉDÉ ET APPAREIL POUR L'ENVOI D'UNE DEMANDE DE FORMULAIRE

(30) Priority: 24.05.2018 CN 201810509555
(43) Date of publication of application: 22.07.2020
(73) Proprietor: Wangsu Science & Technology Co., Ltd., Shanghai 200030 (CN)
(72) Inventor: HUANG, Meifen, Shanghai 200030 (CN)
(74) Representative: Vinsome, Rex Martin
(86) International application number: PCT/CN2018/091580
(87) International publication number: WO 2019/223049

(56) References cited:
- CN-A- 107 566 200
- CN-A- 107 577 550
- CN-A- 107 590 397
- CN-A- 108 023 860
- US-A1- 2003 051 142
- US-A1- 2006 288 220

## Description

### TECHNICAL FIELD

The present disclosure relates to the field of data transmission technology, in particular, to a method and device for transmitting a form request.

### BACKGROUND

With rapid development of the Internet and computer technology, people are living an increasingly faster pace of life, e-commerce has become a trend of commodity transactions, and network transactions are becoming more and more popular. Users can realize network transactions by performing a series of operations such as visiting e-commerce websites, selecting commodities, submitting orders, and making payments.

A process of submitting an order in the network transaction is essentially a process of transmitting a form. The user may request an order page from an e-commerce website through a terminal, and a server of the e-commerce website can feed back a corresponding order page to the terminal (the order page may be called a response page), the order page may contain one or more forms. After the terminal receives and displays the order page, the user may input in the order page corresponding order information such as the number of commodities purchased, a style of a commodity, etc., and then the terminal may fill the order information in a corresponding form and transmit the form to the server of the e-commerce website.

In a process of realizing the present application, the inventor finds that at least the following problem exists in the existing technology.

Because a server of an e-commerce website has more or less vulnerabilities such as a system defect and a logic error, these vulnerabilities are often taken advantage of by lawbreakers to conduct malicious transactions, during which after obtaining an order page from the server of the e-commerce website, the lawbreakers would maliciously tamper parameters in the form like value of a commodity, and thus security of the network transaction is poor.

US 20030051142A1 provides systems and methods offering security on a network.

US 20060288220A1 provides a WAF installed between a server that is serving web content and a network over which clients access the website.

### SUMMARY

In order to solve the problem in the existing technology, embodiments of the present application provide a method and device for transmitting a form request, the technical solutions are described below.

In a first aspect, the present disclosure provides a method for transmitting a form request, the method including:
generating signature information based on a preset read-only parameter of a form in a target response page when receiving the target response page fed back by a server;
adding the signature information to the form of the target response page and transmitting the target response page to a terminal;
receiving a target form request corresponding to the target response page transmitted by the terminal and verifying the signature information in a form contained in the target form request; and transmitting the target form request to the server if the verification is successful, otherwise performing a prevention process on the target form request, receiving the target form request corresponding to the target response page transmitted by the terminal and verifying the signature information in the form contained in the target form request includes:
   receiving the target form request corresponding to the target response page transmitted by the terminal and obtaining request information of the target form request, where the request information at least contains a URL corresponding to the target form request, a parameter format of the preset read-only parameter and the signature information;
   determining whether the target form request is a form request to be prevented based on the request information and a form request learning table stored locally; and
   verifying the signature information in the form contained in the target form request if the target form request is a form request to be prevented.

The form request learning table records request information of all form requests obtained that need to be prevented. Here, all form requests are processed by big-data processing and machine learning.

The invention is disclosed by the independent claims. Further embodiments are described by the dependent claims.

In a second aspect, the present disclosure provides a WAF device including a processor and a memory. The memory stores at least one instruction, at least one program and a code set or an instruction set, and the at least one instruction, the at least one program and the code set or the instruction set are loaded by the processor and are executed to implement the method for transmitting the form request as described in the first aspect.

In a third aspect, the present disclosure provides a computer readable storage medium, storing at least one instruction, at least one program and a code set or an instruction set. The at least one instruction, the at least one program and the code set or the instruction set are loaded by the processor and are executed to implement the method for transmitting the form request as described in the first aspect.

The technical solutions provided in the embodiments of the present application have the following advantageous effects.

In embodiments of the present disclosure, signature information is generated based on a preset read-only parameter of a form in a target response page when receiving the target response page fed back by a server. The signature information is added to the form of the target response page and the target response page is transmitted to the terminal. A target form request corresponding to the target response page transmitted by the terminal is received, and the signature information in a form contained in the target form request is verified. The target form request is transmitted to the server if the verification is successful, otherwise a prevention process is performed on the target form request. In this way, the signature information is added to the form in advance. When the form request is received, the form information is used to verify whether the form is tampered with maliciously, so that an abnormal form request may be detected in time and prevented, which can improve security of submission of the form. In addition, by performing big-data learning with respect to varied form requests and adding signature and prevention to the form requests based on a learning result, a malicious data packet can be found and a corresponding prevention measure can be implemented in time.

### BRIEF DESCRIPTION OF THE DRAWINGS

In order to illustrate the technical solutions in the embodiments of the present disclosure more clearly, the drawings used in the description of the embodiments will be briefly described below. It is obvious that the drawings in the following description are only some embodiments of the present disclosure. For those skilled in the art, other drawings may also be obtained based on these drawings without any inventive effort.
FIG. 1 is a schematic diagram of a scenario framework for transmitting a form request according to an embodiment of the present disclosure.
FIG. 2 is a flowchart of a method for transmitting a form request according to an embodiment of the present disclosure.
FIG. 3 is a schematic workflow of validating signature information according to an embodiment of the present disclosure.
FIG. 4 is a schematic structural diagram of a device for transmitting a form request according to an embodiment of the present disclosure.
FIG. 5 is a schematic structural diagram of a device for transmitting a form request according to another embodiment of the present disclosure.
FIG. 6 is a schematic structural diagram of a WAF device according to an embodiment of the present disclosure.

### DETAILED DESCRIPTION

To make the objectives, the technical solutions and the advantages of the present disclosure more clearer, the embodiments of the present disclosure will be further described in details below with reference to the accompany drawings.

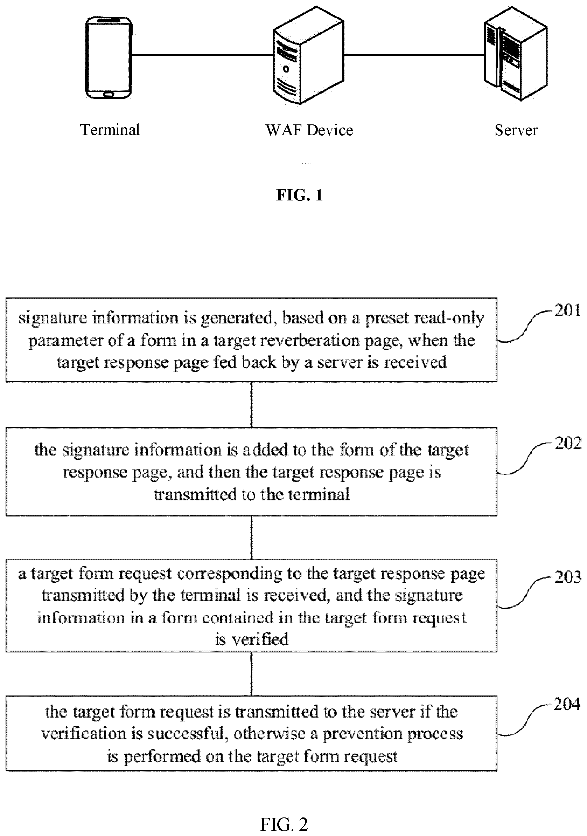

An embodiment of the present disclosure provides a method for transmitting a form request. An entity that implements the method may be a web application firewall (WAF) device. Herein, the WAF device may be deployed in a network transmission path between a server and a terminal. The terminal may be installed with a client of a web application, and the server may be a background server of the web application. The WAF device may be understood as a WAF which is configured to detect and verify a content of various requests transmitted by the terminal to the server to ensure their security and legality and to block illegal requests in real time. The WAF may be a system composed of a plurality of WAF devices. Each WAF device may be a physical entity device or a virtual device created dependent on a physical entity device. A particular network framework may be one as shown in FIG. 1. The WAF device may include a processor, a memory and a transceiver. The processor may be configured to perform a process of transmitting a form request in a following procedure. The memory may be configured to store data required in the following processing and generate data. The transceiver may be configured to receive and transmit relevant data in the following processing. In order to facilitate understanding, in an embodiment, that the web application is an online shopping application is taken as an example for description. Other web applications are similar to this, and special description will be made where necessary.

The process flow shown in FIG. 2 will be described in detail below with reference to particular embodiments, which may be as follows.

In step 201, signature information is generated, based on a preset read-only parameter of a form in a target response page, when the target response page fed back by a server is received.

Herein, the response page may be a page fed back by the server to the terminal with respect to a page acquisition request after the terminal transmits the page acquisition request to the server. The preset read-only parameter may be a non-editable parameter pre-selected from the form by a technician at a WAF device side.

In implementation, a user may install a client of an online shopping application on the terminal, and may then through the client access the server of the online shopping application, and request at the server web pages provided such as a commodity list page, a commodity detail page and a purchase page. Specifically, after the user clicks a key on the terminal, the terminal may be triggered to transmit the page acquisition request to the server. After receiving the page acquisition request, the server may feed back a corresponding page (i.e., the target response page) to the terminal. In this way, after receiving the target response page fed back to the terminal by the server, the WAF device may match and obtain a content of the form on the target response page, extract the preset read-only parameter of the form, and thus may generate the signature information based on the extracted preset read-only parameter. For example, the response page contains the following form:

```
     <formid="formid" name=" myform"method='post'action='testURL' >
        <inputtype="hidden"name="name1"value="value1"/>
        <inputtype="text"readonlyname="name2"value="value2"/>
        <inputtype="text"readonly="true"name="name3"value="value3"/>
        <inputtype="submit"value=""class="btn2"/>
     </form>
```

The WAF device may extract the preset read-only parameter (name 1, value 1, name 2, value 2, name 3 and value 3), then perform a signature process on the preset read-only parameter through a relevant algorithm, and generate a signature information: <inputtype="hidden"name="flag"value="encodeValue"/>.

In step 202, the signature information is added to the form of the target response page, and then the target response page is transmitted to the terminal.

In implementation, the WAF device, after generating the signature information based on the preset read-only parameter of the form, may add the signature information into the form, and may then transmit the target response page including the form added with the signature information to the terminal. It shall be noted that if the response page including a plurality of forms, signature information may be generated with respect to each form and the signature information may be added to a corresponding form. In this way, the signature information is added to each form on the response page.

In step 203, a target form request corresponding to the target response page transmitted by the terminal is received, and the signature information in a form contained in the target form request is verified.

In implementation, the terminal, after receiving the target response page transmitted by the WAF device, may display the target response page. After the user performs input in an input box on the target response page, the terminal may fill data input by the user into a form corresponding to the target response page. After the user inputs and clicks a confirmation key, the terminal may transmit to the WAF device the target form request corresponding to the target response page. In this way, the WAF device, after receiving the target form request, may extract the signature information in the form contained in the target form request and verify the signature information. It may be appreciated that the signature information here is the signature information added to the form at step 202, the terminal only fills in the form the data input by the user but does not make any change to the signature information in the form, and thus the signature information is available in the form contained in the target form request.

Optionally, the WAF device may only prevent an assigned form request. Correspondingly, a process of step 203 may be as follows: receiving the target form request corresponding to the target response page transmitted by the terminal and obtaining request information of the target form request; determining whether the target form request is a form request to be prevented based on the request information and a form request learning table stored locally; and verifying the signature information in the form contained in the target form request if the target form request is a form request to be prevented.

Herein, the request information at least contains a uniform resource locator (URL) corresponding to the target form request, a parameter format of the preset read-only parameter and the signature information.

In implementation, the WAF device may pre-store the form request learning table which records request information of all form requests obtained that need to be prevented after being processed by big-data and machine learning. In this way, the WAF device, after receiving the target form request corresponding to the target response page transmitted by the terminal, may first acquire such request information as the URL corresponding to the target form request, the parameter format (such as the integer type, enumeration and the characters, and so on) of the preset read-only parameter and the signature information, etc., and then the form request learning table stored locally may be sought for whether the same request information item is available, so as to determine whether the target form request is the form request to be prevented. If it is, the signature information in the form contained in the target form request may be verified. If it is not, the target form request may be directly transmitted to the server. It shall be noted that apart from the form information of the form request that need to be prevented, the form request learning table may further record form information of the form request that does not need to be prevented and form information of the form request in a learning phase. Besides, each form information is tagged accordingly, so that when a request information item of a certain form request is found in the form request learning table, it may be determined whether a current form request is a form request to be prevented based on a corresponding tag. Herein, for each form request to be prevented, its corresponding page shall be set as forced not to cache so as to avoid a terminal's caching a relevant page affecting a following verification of the signature information.

Optionally, when a certain response page is received for the first time, its corresponding form request may be added to the form request learning table, and a corresponding process may be as follows: inserting the request information in the form request learning table and recording that the target form request is in a learning phase, if the request information of the target form request corresponding to the target response page does not exist in the form request learning table when the target response page fed back by the server is received.

In implementation, the WAF device, when receiving the target response page fed back by the server to the terminal, may first determine the target form request corresponding to the target response page, and then acquire the request information of the target form request. After that, the WAF device may call the form request learning table locally stored and search the form request learning table for whether the request information of the target form request is available. If no, the WAF device may insert the request information of the above target form request in the form request learning table, and record that the target form request is in the learning phase. If yes, the WAF device may directly forward the target response page to the terminal, to wait for the terminal to send the target form request, and to perform subsequent processing.

Optionally, if a form request sent by several terminals carries signature information, it means that the form request need to be prevented, and a corresponding process may be as follows: determining target form requests as form requests to be prevented if the target form requests carrying signature information and that transmitted by at least a preset number of different terminals are received within a preset duration.

In implementation, the WAF device, after adding the request information of the target form request to the form request learning table, may record the number of terminals that send target form requests carrying the signature information. If the target form requests that carry signature information and that are transmitted by at least a preset number of different terminals are received within a preset duration, the target form requests may be considered as needing a prevention process, and further, the WAF device may determine the target form requests as form requests to be prevented. It shall be noted that when the form requests carrying the signature information are received, if the request information of the form requests is unavailable in the form request learning table, the WAF device may insert the request information of the form requests into the form request learning table and record the number of the received form requests described above as 1.

Optionally, based on the processing of recording the request information of the form requests in the above form request learning table, the verification of the signature information in step 203 may specifically be as follows: determining whether the signature information in the form contained in the target form request can be decrypted based on a preset decryption algorithm, whether parameter information obtained through the decryption is consistent with the preset read-only parameter, and whether the request information of the target form request is consistent with the request information of the target form request recorded in the form request learning table.

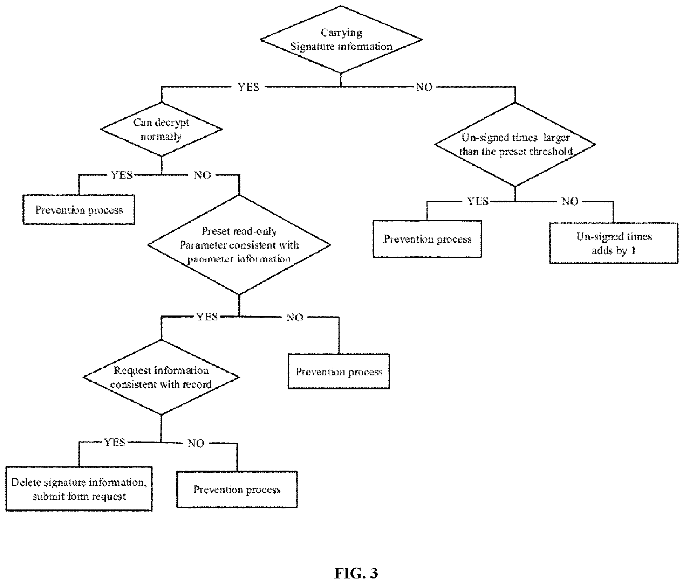

In implementation, the WAF device, after receiving the target form request corresponding to the target response page transmitted by the terminal, may extract the signature information in the form contained in the target form request. Then the WAF device may call the preset decryption algorithm to decrypt the signature information. If the decryption cannot be performed normally, the signature information may be considered to have been modified, the target form request is likely to be a malicious request, and thus the prevention process may be performed on the target form request. However, if the decryption can be performed normally, it may be further determined whether the parameter information acquire through the decryption is consistent with the preset read-only parameter of the corresponding form. In case of inconsistency, the signature information may be considered to have been modified, the target form request is likely to be a malicious request, and thus the prevention process may be performed on the target form request. However, in a case of consistency, the request information of the target form request may be extracted, and it may be determined whether the request information of the target form request is consistent with the request information of the target form request recorded in the form request learning table. In a case of inconsistency, it shows that the target form request is an abnormal form request that needs to be prevented. However, in the case of consistency, the signature information in the target form request may be deleted, and then the target form request may be submitted to the server. It shall be noted that, if the WAF device receives the target form request and determines that the target form request is a form request to be prevented, and the target form request does not carry the signature information, the transmission terminal of the target form request may be determined before determining the number of transmission times of the form request corresponding to the transmission terminal that does not carry signature information (which also be called the number of un-signed times). If the number of un-signed times is greater than a preset threshold, the target form request may be prevented directly. If the number of un-signed times is less than or equal to the preset threshold, the number of un-signed times may be increased by one. A specific verification procedure of the above-described may be seen in FIG. 3.

In step 204, the target form request is transmitted to the server if the verification is successful, otherwise a prevention process is performed on the target form request.

In implementation, if the WAF device successfully verifies the signature information in the form contained in the target form request, the target form request may be considered as a normal form request, the signature information in the target form request may be deleted, and then the target form request may be transmitted to the server. If the verification of the signature information in the form contained in the target form request fails, it may be considered that the parameter of the form contained in the target form request is maliciously modified, the received target form request may be a malicious request, and the WAF device may prevent the target form request. It shall be noted that a specific prevention process may be set manually by a technician at the WAF device side. For example, the prevention process may be a further manual review of the target form request, or the prevention process may intercept the target form request, or the prevention process may request the terminal to retransmit the target form request.

In embodiments of the present disclosure, signature information is generated, based on a preset read-only parameter of the form in a target response page, when the target response page fed back by a server is received. The signature information is added to the form of the target response page, and the target response page is transmitted to the terminal. A target form request corresponding to the target response page transmitted by the terminal is received, and the signature information in the form contained in the target form request is verified. The target form request is transmitted to the server if the verification is successful, otherwise a prevention process is performed on the target form request. In this way, the signature information is added to the form in advance. When the form request is received, the signature information is used to verify whether the form is tampered with maliciously, so that an abnormal form request may be detected in time and prevented, which can improve security of submission of the form. In addition, through big-data learning with respect to varied form requests and adding signature and prevention to the form requests based on a learning result, a malicious data packet may be found and a corresponding prevention measure may be implemented in time.

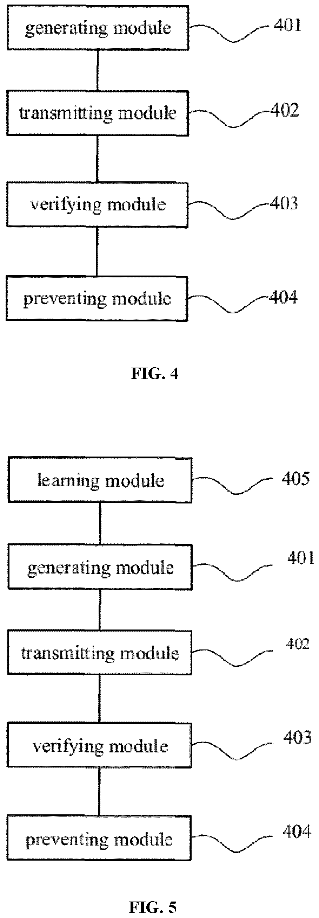

Based on the same technical concept, an embodiment of the present disclosure further provides a device for transmitting a form request. As shown in FIG. 4, the device includes:
a generating module 401, configured to generate signature information based on a preset read-only parameter of the form in a target response page when the target response page fed back by a server is received;
a transmitting module 402, configured to add the signature information to the form of the target response page, and transmit the target response page to a terminal;
a verifying module 403 configured to receive a target form request corresponding to the target response page transmitted by the terminal and verify the signature information in the form contained in the target form request; and
a preventing module 404, configured to transmit the target form request to the server if the verification is successful, otherwise perform a prevention process on the target form request.

Optionally, the verifying module 403 is specifically configured to:
receive the target form request corresponding to the target response page transmitted by the terminal and obtain request information of the target form request, where the request information at least contains a URL corresponding to the target form request, a parameter format of the preset read-only parameter and the signature information;
determine whether the target form request is a form request to be prevented based on the request information and a form request learning table stored locally;
verify the signature information in the form contained in the target form request if the target form request is a form request to be prevented.

Optionally, the form request learning table records request information of all form requests obtained that need to be prevented after being processed by big-data and machine learning.

Optionally, as shown in FIG. 5, the device further includes:
a learning module 405, configured to insert the request information in the form request learning table and record that the target form request is in a learning phase, if the request information of the target form request corresponding to the target response page does not exist in the form request learning table when the target response page fed back by the server is received.

Optionally, the learning module 405 is further configured to:
determine target form requests as form requests to be prevented if the target form requests carrying signature information that transmitted by at least a preset number of different terminals are received within a preset duration.

Optionally, the verifying module 403 is specifically configured to:
determine whether the signature information in the form contained in the target form request can be decrypted based on a preset decryption algorithm, whether parameter information obtained through the decryption is consistent with the preset read-only parameter, and whether the request information of the target form request is consistent with the request information of the target form request recorded in the form request learning table.

Optionally, the verifying module 403 is further configured to:
determine a transmission terminal of the target form request if the target form request is a form request to be prevented and the target form request does not carry signature information;
determine the number of un-signed times of form requests corresponding to the transmission terminal; and
perform a prevention process on the target form request if the number of un-signed times is greater than a preset threshold, otherwise the number of un-signed times is increased by one.

In embodiments of the present disclosure, signature information is generated, based on a preset read-only parameter of the form in a target response page, when the target response page fed back by a server is received. The signature information is added to the form of the target response page, and the target response page is transmitted to the terminal. A target form request corresponding to the target response page transmitted by the terminal is received, and the signature information in the form contained in the target form request is verified. The target form request is transmitted to the server if the verification is successful, otherwise a prevention process is performed on the target form request. In this way, the signature information is added to the form in advance. When the form request is received, the form information is used to verify whether the form is tampered with maliciously, so that an abnormal form request may be detected in time and prevented, which can improve security of submission of the form. In addition, through big-data learning with respect to varied form requests and adding signature and prevention to the form requests based on a learning result, a malicious data packet may be found and a corresponding prevention measure may be implemented in time.

It shall be noted that, the device for transmitting a form request provided in the above-described embodiment, when sending the form request, only uses the division of the above-described functional modules as an example for description. In practical applications, the above-mentioned function may be distributed to and completed by different functional modules based on what is needed. That is, the internal structure of the device is divided into varied functional modules to complete all or some functions as described above. In addition, the device for transmitting a form request provided in the above-described embodiment and the embodiments of the method for sending a form request belongs to the same concept. For specific implementation processes, please refer to the embodiments of the method and details are not repeated herein.

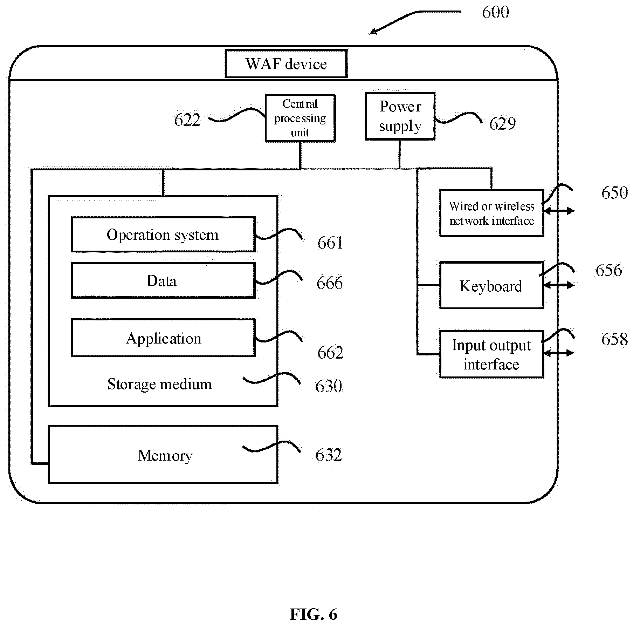

FIG. 6 is a schematic structural diagram of a WAF device based on an embodiment of the present disclosure. A WAF device 600 may result in a big difference due to differences in configuration or performance. The WAF device 600 may include one or more central processing units 622 (for example, one or more processors) and a memory 632, and one or more storage media 630 (e.g., one or more mass storage devices) that store a storage application 662 or data 666. Herein, the memory 632 and the storage medium 630 may be of transient storage or persistent storage. A program stored in the storage medium 630 may include one or more modules (not shown in the figure), and each module may include a series of instruction operations on the WAF device. Further, the central processing unit 622 may be configured to communicate with the storage medium 630 and execute a series of instructed operations in the storage medium 630 on the WAF device 600.

The WAF device 600 may further include one or more power supplies 626, one or more wired or wireless network interfaces 650, one or more input-output interfaces 658, one or more keyboards 656, and/or one or more operation systems 661, for example, Windows ServerTM, Mac OSXTM, UnixTM, LinuxTM, FreeBSDTM and so on.

The WAF device 600 may include a memory and one or more programs, where the one or more programs are stored in the memory and are configured to be executed by one or more processors to execute the one or more programs including instructions for performing the transmission of the above form requests.

Those skilled in the art may appreciate that all or some steps that realize the above-described embodiments may be implemented through hardware, or may be implemented by instructing related hardware through a program which may be stored in a computer readable storage medium. The storage medium may be a read-only memory, a magnetic disc, or a compact disc.

## Claims

1. A method for transmitting a form request, comprising:
generating (201) signature information based on a preset read-only parameter of a form in a target response page when receiving the target response page fed back by a server;
adding (202) the signature information to the form of the target response page and transmitting the target response page to a terminal;
receiving (203) a target form request corresponding to the target response page transmitted by the terminal and verifying (203) the signature information in a form contained in the target form request; and
transmitting (204) the target form request to the server if the verification is successful, otherwise performing (204) a prevention process on the target form request;
wherein receiving the target form request corresponding to the target response page transmitted by the terminal and verifying the signature information in a form contained in the target form request comprises:
receiving the target form request corresponding to the target response page transmitted by the terminal and obtaining request information of the target form request, wherein the request information at least contains a uniform resource locator, URL corresponding to the target form request, a parameter format of the preset read-only parameter and the signature information;
determining whether the target form request is a form request to be prevented based on the request information and a form request learning table stored locally; and
verifying the signature information in the form contained in the target form request if the target form request is a form request to be prevented;
wherein the form request learning table records request information of all form requests obtained that need to be prevented, wherein the all form requests are obtained by big-data processing and machine learning.

2. The method according to claim1, wherein the method further comprises:
inserting the request information in the form request learning table and recording sthe target form request is in a learning phase, if the request information of the target form request corresponding to the target response page does not exist in the form request learning table when receiving the target response page fed back by the server.

3. The method according to claim 2, wherein after inserting the request information in the form request learning table, the method further comprising:
determining target form requests as form requests to be prevented if the target form requests carrying signature information that transmitted by at least a preset number of different terminals are received within a preset duration.

4. The method according to claim 1, wherein verifying the signature information in the form contained in the target form request comprises:
determining whether the signature information in the form contained in the target form request is decrypted based on a preset decryption algorithm, whether a decrypted parameter information is consistent with the preset read-only parameter, and whether the request information of the target form request is consistent with the request information of the target form request recorded in the form request learning table.

5. The method according to claim 1, further comprising:
determining a transmission terminal of the target form request if the target form request is a form request to be prevented and the target form request does not carry signature information;
determining the number of un-signed times of form requests corresponding to the transmission terminal; and
performing a prevention process on the target form request if the number of un-signed times is greater than a preset threshold, otherwise adding the number of un-signed times by one.

6. The method according to claim 1, further comprising:
seeking whether a same request information item is available in the form request learning table stored locally, and determining whether the target form is the form request to be prevented;
verifying the signature information in the form contained in the target form request if YES; alternatively, transmitting the target form request directly to the server if NO.

7. The method according to claim 1, wherein,
recording form information of a form request that does not need to be prevented, and form information of a form request in a learning phase, by the form request learning table;
tagging each form information accordingly; and
determining whether a current form request is a form request to be prevented based on a corresponding tag when request information item of a certain form request is found in the form request learning table.

8. The method according to claim 4, further comprising:
decrypting the signature information in the form contained in the target form request based on the preset decryption algorithm;
considering the signature information has been modified if the decryption is not performed normally; and
preventing the target form request.

9. The method according to claim 8, further comprising:
determining whether a decrypted parameter information is consistent with the preset read-only parameter of a corresponding form if the decryption is performed normally;
considering the signature information has been modified if it is inconsistency; and
preventing the target form request.

10. The method according to claim 9, further comprising:
extracting request information of the target form request if the decrypted parameter information is consistent with the preset read-only parameter of the corresponding form;
determining whether the request information of the target form request is consistent with the request information of the target form request recorded in the form request learning form; and
preventing the target form request if it is inconsistency.

11. The method according to claim 1, further comprising:
deleting the signature information in the target form request if the verification is successful; and
transmitting the target form request to the server.
transmitting the target form request to the server if the verification is successful, alternatively, performing a prevention process on the target form request.

12. A Web Application Firewall, WAF, device (600), comprising a processor (622) and a memory (632), wherein the memory stores at least one instruction, at least one program and a code set or an instruction set;
wherein the at least one instruction, the at least one program and the code set or the instruction set are loaded and executed by the processor to implement a method for transmitting the form request according to any one of claims 1 to 11.

13. A computer readable storage medium (630), storing at least one instruction, at least one program and a code set or an instruction set;
wherein the at least one instruction, the at least one program and the code set or the instruction set are loaded and executed by the processor to implement a method for transmitting the form request according to any one of claims 1 to 11.

## Patentansprüche

1. Verfahren zum Übertragen einer Formularanforderung, umfassend:
Erzeugen (201) von Signaturinformation basierend auf einem vorbestimmten Nur-Lese-Parameter eines Formulars in einer Zielantwortseite, wenn die Zielantwortseite, die von einem Server zurückgeführt wird, empfangen wird;
Hinzufügen (202) der Signaturinformation zu dem Formular der Zielantwortseite und Übertragen der Zielantwortseite an ein Endgerät;
Empfangen (203) einer Zielformularanforderung, die der von dem Endgerät übertragenen Zielantwortseite entspricht, und Verifizieren (203) der Signaturinformation in einem in der Zielformularanforderung enthaltenen Formular; und
Übertragen (204) der Zielformularanforderung an den Server, wenn die Verifizierung erfolgreich ist, andernfalls Durchführen (204) eines Verhinderungsprozesses an der Zielformularanforderung;
wobei das Empfangen der Zielformularanforderung, die der von dem Endgerät übertragenen Zielantwortseite entspricht, und das Verifizieren der Signaturinformation in einem in der Zielformularanforderung enthaltenen Formular umfasst:
Empfangen der Zielformularanforderung, die der von dem Endgerät übertragenen Zielantwortseite entspricht, und Erhalten von Anforderungsinformation der Zielformularanforderung, wobei die Anforderungsinformation zumindest einen Uniform-Resource-Locator, URL, der der Zielformularanforderung entspricht, ein Parameterformat des vorbestimmten Nur-Lese-Parameters und die Signaturinformation enthält;
Bestimmen, ob die Zielformularanforderung eine zu verhindernde Formularanforderung ist, basierend auf der Anforderungsinformation und einer lokal gespeicherten Formularanforderungs-Lerntabelle; und
Verifizieren der Signaturinformation in dem in der Zielformularanforderung enthaltenen Formular, wenn die Zielformularanforderung eine zu verhindernde Formularanforderung ist;
wobei die Formularanforderungs-Lerntabelle die Anforderungsinformation aller erhaltenen Formularanforderungen, die verhindert werden müssen, aufzeichnet, wobei die allen Formularanforderungen durch Big-Data-Verarbeitung und maschinelles Lernen erhalten werden.

2. Verfahren nach Anspruch 1, wobei das Verfahren ferner umfasst:
Einfügen der Anforderungsinformation in die Formularanforderungs-Lerntabelle und Aufzeichnen, dass sich die Zielformularanforderung in einer Lernphase befindet, wenn die Anforderungsinformation der Zielformularanforderung, die der Zielantwortseite entspricht, nicht in der Formularanforderungs-Lerntabelle vorhanden ist, wenn die Zielantwortseite, die vom Server zurückgeführt wird, empfangen wird.

3. Verfahren nach Anspruch 2, wobei das Verfahren nach dem Einfügen der Anforderungsinformation in die Formularanforderungs-Lerntabelle ferner umfasst:
Bestimmen von Zielformularanforderungen als zu verhindernde Formularanforderungen, wenn die Zielformularanforderungen, die Signaturinformation tragen, die von mindestens einer vorbestimmten Anzahl verschiedener Endgeräte übertragen wurden, innerhalb einer vorbestimmten Dauer empfangen werden.

4. Verfahren nach Anspruch 1, wobei das Verifizieren der Signaturinformation in dem in der Zielformularanforderung enthaltenen Formular umfasst:
Bestimmen, ob die Signaturinformation in dem in der Zielformularanforderung enthaltenen Formular basierend auf einem vorbestimmten Entschlüsselungsalgorithmus entschlüsselt ist, ob eine entschlüsselte Parameterinformation mit dem vorbestimmten Nur-Lese-Parameter konsistent ist, und ob die Anforderungsinformation der Zielformularanforderung mit der Anforderungsinformation der Zielformularanforderung konsistent ist, die in der Formularanforderungs-Lerntabelle aufgezeichnet ist.

5. Verfahren nach Anspruch 1, ferner umfassend:
Bestimmen eines Übertragungsendgerätes der Zielformularanforderung, wenn die Zielformularanforderung eine zu verhindernde Formularanforderung ist und die Zielformularanforderung keine Signaturinformation trägt;
Bestimmen der Anzahl der nicht signierten Male von Formularanforderungen, die dem Übertragungsendgerät entsprechen; und
Durchführen eines Verhinderungsprozesses an die Zielformularanforderung, wenn die Anzahl der nicht signierten Male größer als ein vorbestimmter Schwellenwert ist, andernfalls Addieren der Anzahl der nicht signierten Male um eins.

6. Verfahren nach Anspruch 1, ferner umfassend:
Suchen, ob ein gleicher Anforderungsinformationseintrag in der lokal gespeicherten Formularanforderungs-Lerntabelle verfügbar ist, und Bestimmen, ob das Zielformular die zu verhindernde Formularanforderung ist;
Verifizieren der Signaturinformation in dem in der Zielformularanforderung enthaltenen Formular, wenn JA; alternativ, Übertragen der Zielformularanforderung direkt an den Server, wenn NEIN.

7. Verfahren nach Anspruch 1, wobei,
Aufzeichnen von Formularinformation einer Formularanforderung, die nicht verhindert werden muss, und von Formularinformation einer Formularanforderung in einer Lernphase, durch die Formularanforderungs-Lerntabelle;
Kennzeichnen jeder Formularinformation dementsprechend; und
Bestimmen, ob eine aktuelle Formularanforderung eine zu verhindernde Formularanforderung ist, basierend auf einer entsprechenden Kennzeichnung, wenn ein Anforderungsinformationseintrag einer bestimmten Formularanforderung in der Formularanforderungs-Lerntabelle gefunden wird.

8. Verfahren nach Anspruch 4, ferner umfassend:
Entschlüsseln der Signaturinformation in dem in der Zielformularanforderung enthaltenen Formular, basierend auf dem vorbestimmten Entschlüsselungsalgorithmus;
Berücksichtigen, dass die Signaturinformation modifiziert wurde, wenn die Entschlüsselung nicht normal durchgeführt wird; und
Verhindern der Zielformularanforderung.

9. Verfahren nach Anspruch 8, ferner umfassend:
Bestimmen, ob eine entschlüsselte Parameterinformation mit dem vorbestimmten Nur-Lese-Parameter eines entsprechenden Formulars konsistent ist, wenn die Entschlüsselung normal durchgeführt wird;
Berücksichtigen, dass die Signaturinformation modifiziert wurde, wenn sie inkonsistent ist; und
Verhindern der Zielformularanforderung.

10. Verfahren nach Anspruch 9, ferner umfassend:
Entpacken der Anforderungsinformation der Zielformularanforderung, wenn die entschlüsselte Parameterinformation mit dem vorbestimmten Nur-Lese-Parameter des entsprechenden Formulars konsistent ist;
Bestimmen, ob die Anforderungsinformation der Zielformularanforderung mit der Anforderungsinformation der Zielformularanforderung konsistent ist, die in dem Formularanforderungs-Lernformular aufgezeichnet ist; und
Verhindern der Zielformularanforderung, wenn sie inkonsistent ist.

11. Verfahren nach Anspruch 1, ferner umfassend:
Löschen der Signaturinformation in der Zielformularanforderung, wenn die Verifizierung erfolgreich ist; und
Übertragen der Zielformularanforderung an den Server.
Übertragen der Zielformularanforderung an den Server, wenn die Verifizierung erfolgreich ist, alternativ, Durchführen eines Verhinderungsprozesses an der Zielformularanforderung.

12. Web-Applikations-Firewall (WAF) -Vorrichtung (600), umfassend einen Prozessor (622) und einen Speicher (632), wobei der Speicher mindestens einen Befehl, mindestens ein Programm und einen Codesatz oder einen Befehlssatz speichert;
wobei der mindestens eine Befehl, das mindestens eine Programm und der Codesatz oder der Befehlssatz durch den Prozessor geladen und ausgeführt werden, um ein Verfahren zum Übertragen der Formularanforderung nach einem der Ansprüche 1 bis 11 zu implementieren.

13. Computerlesbares Speichermedium (630), das mindestens einen Befehl, mindestens ein Programm und einen Codesatz oder einen Befehlssatz speichert;
wobei der mindestens eine Befehl, das mindestens eine Programm und der Codesatz oder der Befehlssatz durch den Prozessor geladen und ausgeführt werden, um ein Verfahren zum Übertragen der Formularanforderung nach einem der Ansprüche 1 bis 11 zu implementieren.

## Revendications

1. Procédé pour transmettre une demande de formulaire, comprenant le fait de :
générer (201) des informations de signature sur la base d'un paramètre en lecture seule prédéfini d'un formulaire dans une page de réponse cible lors de la réception de la page de réponse cible renvoyée par un serveur ;
ajouter (202) les informations de signature au formulaire de la page de réponse cible et transmettre la page de réponse cible à un terminal ;
recevoir (203) une demande de formulaire cible correspondant à la page de réponse cible transmise par le terminal et vérifier (203) les informations de signature dans un formulaire contenu dans la demande de formulaire cible, et
transmettre (204) la demande de formulaire cible au serveur si la vérification est réussie, sinon effectuer (204) un processus de prévention sur la demande de formulaire cible,
dans lequel la réception de la demande de formulaire cible correspondant à la page de réponse cible transmise par le terminal et la vérification des informations de signature dans un formulaire contenu dans la demande de formulaire cible comprennent le fait de :
recevoir la demande de formulaire cible correspondant à la page de réponse cible transmise par le terminal et obtenir des informations de demande de la demande de formulaire cible, où les informations de demande contiennent au moins une adresse universelle, URL correspondant à la demande de formulaire cible, un format de paramètre du paramètre en lecture seule prédéfini et les informations de signature ;
déterminer si la demande de formulaire cible est une demande de formulaire à prévenir sur la base des informations de demande et d'une table d'apprentissage de demande de formulaire stockée localement ; et
vérifier les informations de signature dans le formulaire contenu dans la demande de formulaire cible si la demande de formulaire cible est une demande de formulaire à éviter ;
dans lequel la table d'apprentissage de demande de formulaire enregistre des informations de demande de toutes les demandes de formulaire obtenues qui doivent être évitées, dans lequel toutes les demandes de formulaire sont obtenues par un traitement de mégadonnées et un apprentissage automatique.

2. Procédé selon la revendication 1, dans lequel le procédé comprend en outre le fait de :
insérer les informations de demande dans la table d'apprentissage de demande de formulaire et enregistrer que la demande de formulaire cible est dans une phase d'apprentissage, si les informations de demande de la demande de formulaire cible correspondant à la page de réponse cible n'existe pas dans la table d'apprentissage de demande de formulaire lors de la réception de la page de réponse cible renvoyée par le serveur.

3. Procédé selon la revendication 2, dans lequel après avoir inséré les informations de demande dans la table d'apprentissage de demande de formulaire, le procédé comprenant en outre le fait de :
déterminer des demandes de formulaire cibles en tant que demandes de formulaire à éviter si les demandes de formulaire cibles portant des informations de signature qui sont transmises par au moins un nombre prédéfini de terminaux différents sont reçues dans une durée prédéfinie.

4. Procédé selon la revendication 1, dans lequel la vérification des informations de signature dans le formulaire contenu dans la demande de formulaire cible comprend le fait de :
déterminer si les informations de signature dans le formulaire contenu dans la demande de formulaire cible sont décryptées sur la base d'un algorithme de décryptage prédéfini, si des informations de paramètre décryptées sont compatibles avec le paramètre en lecture seule prédéfini, et si les informations de demande de la demande de formulaire cible sont compatibles avec les informations de demande de la demande de formulaire cible enregistrée dans la table d'apprentissage de demande de formulaire.

5. Procédé selon la revendication 1, comprenant en outre le fait de :
déterminer un terminal de transmission de la demande de formulaire cible si la demande de formulaire cible est une demande de formulaire à éviter et la demande de formulaire cible ne porte pas d'informations de signature ;
déterminer le nombre de fois sans signature des demandes de formulaire correspondant au terminal de transmission ; et
effectuer un processus de prévention sur la demande de formulaire cible si le nombre de fois sans signature est supérieur à un seuil prédéfini, sinon augmenter le nombre de fois sans signature de un.

6. Procédé selon la revendication 1, comprenant en outre le fait de :
rechercher si un même élément d'information de demande est disponible dans la table d'apprentissage de demande de formulaire stockée localement, et déterminer si le formulaire cible est la demande de formulaire à éviter ;
vérifier les informations de signature dans le formulaire contenu dans la demande de formulaire cible si OUI ; alternativement, transmettre la demande de formulaire cible directement au serveur si NON.

7. Procédé selon la revendication 1, comprenant le fait de :
enregistrer des informations de formulaire d'une demande de formulaire qui ne doit pas être évitée, et des informations de formulaire d'une demande de formulaire dans une phase d'apprentissage, par la table d'apprentissage de demande de formulaire ;
étiqueter chacune des informations de formulaire en conséquence ; et
déterminer si une demande de formulaire actuelle est une demande de formulaire à éviter sur la base d'une étiquette correspondante lorsqu'un élément d'information de demande d'une certaine demande de formulaire est trouvé dans la table d'apprentissage de demande de formulaire.

8. Procédé selon la revendication 4, comprenant en outre le fait de :
décrypter les informations de signature dans le formulaire contenu dans la demande de formulaire cible sur la base de l'algorithme de décryptage prédéfini ;
considérer que les informations de signature ont été modifiées si le décryptage n'est pas effectué normalement ; et
prévenir la demande de formulaire cible.

9. Procédé selon la revendication 8, comprenant en outre le fait de :
déterminer si des informations de paramètre décryptées sont compatibles avec le paramètre en lecture seule prédéfini d'un formulaire correspondant si le décryptage est effectué normalement ;
considérer que les informations de signature ont été modifiées s'il y a une incompatibilité ; et
éviter la demande de formulaire cible.

10. Procédé selon la revendication 9, comprenant en outre le fait de :
extraire des informations de demande de la demande de formulaire cible si les informations de paramètre décryptées sont compatibles avec le paramètre en lecture seule prédéfini du formulaire correspondant ;
déterminer si les informations de demande de la demande de formulaire cible sont compatibles avec les informations de demande de la demande de formulaire cible enregistrée dans la table d'apprentissage de demande de formulaire ; et
éviter la demande de formulaire cible s'il y a une incompatibilité.

11. Procédé selon la revendication 1, comprenant en outre le fait de :
supprimer les informations de signature dans la demande de formulaire cible si la vérification est réussie ; et
transmettre la demande de formulaire cible au serveur.
transmettre la demande de formulaire cible au serveur si la vérification est réussie,
alternativement, effectuer un processus de prévention sur la demande de formulaire cible.

12. Dispositif de Pare-feu d'Application Web, WAF, (600) comprenant un processeur (622) et une mémoire (632), dans lequel la mémoire stocke au moins une instruction, au moins un programme et un jeu de codes ou un jeu d'instructions ;
dans lequel l'au moins une instruction, l'au moins un programme et le jeu de codes ou le jeu d'instructions sont chargés et exécutés par le processeur pour mettre en œuvre un procédé pour transmettre la demande de formulaire selon l'une quelconque des revendications 1 à 11.

13. Support de stockage lisible par ordinateur (630), stockant au moins une instruction, au moins un programme et un jeu de codes ou un jeu d'instructions,
dans lequel l'au moins une instruction, l'au moins un programme et le jeu de codes ou le jeu d'instructions sont chargés et exécutés par le processeur pour mettre en œuvre un procédé pour transmettre la demande de formulaire selon l'une quelconque des revendications 1 à 11.
